# EUROPÄISCHE PATENTSCHRIFT

(11) **EP 1 364 713 B1**
(45) Veröffentlichungstag und Bekanntmachung des Hinweises auf die Patenterteilung: **16.03.2011**
(21) Anmeldenummer: 03010968.0
(22) Anmeldetag: 16.05.2003
(51) Int. Cl.: B02C 18/16

(54) **Messermühle zur Zerkleinerung von Kunststoffmaterial und Verfahren zum Betrieb**
Blade mill for grinding plastic material and operating method therefor
Broyeur a lames pour le broyage de matiére plastique et procédé d'operation correspondant

(30) Priorität: 21.05.2002 DE 10222814
(43) Veröffentlichungstag der Anmeldung: 26.11.2003
(73) Patentinhaber: NUGA AG Kunststoffschneidemühlen, 9436 Balgach (CH)
(72) Erfinder: Pöltinger, Bruno, 9436 Balgach (CH)
(74) Vertreter: Riebling, Peter

(56) Entgegenhaltungen:
- DE-A1- 2 153 236
- DE-A1- 19 652 904
- US-A- 4 098 463
- US-A- 5 556 039
- PATENT ABSTRACTS OF JAPAN Bd. 2000, Nr. 12, 3. Januar 2001 (2001-01-03) & JP 2000 237617 A (MACHIDA KOGYOSHO:KK), 5. September 2000 (2000-09-05)

## Beschreibung

Gegenstand der Erfindung ist ein Verfahren zum Betrieb einer Messermühle zur Zerkleinerung von Kunststoffmaterial und ein nach dem Verfahren arbeitende Messermühle nach dem Oberbegriff des unabhängigen Anspruches 1.

Derartige Messermühlen sind beispielsweise mit dem Forschungsbericht des Forschungsinstitutes Kunststoff-Recycling - D. Jungert, R. Verhoeven: Kunststoff-Zerkleinerungsmaschinen Marktübersicht 1995; Forschungsinstitutkunststoff-Recycling GmbH, Willich bekannt geworden.

Bei dieser bekannten Anordnung wird eine Messermühle zur Zerkleinerung von Kunststoffmahlgut in der Form vorgeschlagen, dass ausgehend von einem Einwurfschacht eine Förderschnecke das zu zerkleinernde Mahlgut in einen Mahlraum gefördert wird, in welchern Mahlraum auf einer drehend angetriebenen Rotorwalze mehrere am Umfang gleichmäßig verteilt angeordnete und radial nach außen gerichtete Schneidmesser vorhanden sind, die einen geringen Abstand zu einem radial außen liegenden und den Umfang des Mahlraumes bestimmenden Lochsieb einnehmen. In den Mahlraum ragen ortsfeste, radial einwärts gerichtete Statormesser hinein, die zusammen mit den schnell umlaufenden radial nach außen gerichteten Schneidmessern einen Messerspalt bilden.

Weiterhin ist eine derartige Messermühle mit der DE-19652904 A1 und der EP-946304 A1 bekannt geworden. Diese Messermühle bildet den Stand der Technik dahingehend weiter, dass bei gleicher Zerkleinerungsleistung eine wesentlich geringere Antriebsleistung für die Rotorwalze erforderlich ist. Dies wird dadurch gelöst, dass in Drehrichtung vor den Statormessern sich sichelförmig nach außen radial erweiternde Schneidräume vorhanden sind, wobei sich der jeweilige Schneidraum radial auswärts des Drehkreises der rotierenden Messer befindet. Hier wird der wesentliche Vorteil erreicht, dass das zu zerkleinernde Mahlgut aufgrund der vorhandenen Zentrifugalwirkung stets am Innenumfang des Lochsiebes entlang geführt wird. Nun wird gemäß der vorliegenden Erfindung diesem am Innenumfang des Lochsiebes entlang geführten Mahlgut ein Aufnahmeraum gegeben, welcher sich in Drehrichtung der Schneidmesser gesehen - sichelförmig radial auswärts öffnet, so dass er also - wiederum in Drehrichtung gesehen - vor dem eigentlichen ortsfesten Statormesser mit der Kreislinie der umlaufenden Messer zusammenfällt und mit zunehmender Annäherung an die ortsfesten Statormesser sich radial auswärts öffnet, so dass er im Bereich der Statormesser seine größte radiale Öffnung aufweist. Wesentlich hierbei ist, dass die größte radiale Weite dieses sichelförmigen Raumes nur geringfügig größer ist oder gleich groß als die Korngröße des zu zerkleinernden Materials. Ein weiterer Vorteil dieser Ausführung liegt auch darin, dass das Mahlgut nicht von radial außerhalb in den Mahlraum eingeführt wird, sondern dass das Mahlgut mit Hilfe einer Förderschnecke oder einem anderen Längsförderer in axialer Richtung in die umlaufende Rotorwalze eingebracht wird. Dadurch können wesentlich größere Lochsiebe verwendet werden. Andere Anordnungen nach dem Stand der Technik verwenden nämlich lediglich ein einziges Lochsieb, welches an der dem Einfüllschacht gegenüberliegenden Seite des Mahlraumes angeordnet ist und den Mahlraum an einer Seite begrenzt. Bei der Anordnung der DE-19652904 A1 und der EP-9707103 A hingegen besteht der Vorteil, dass aufgrund der axialen Zuführung des Mahlgutes in den Mahlraum nun beide Seiten des Mahlraumes von entsprechenden Lochsieben umgrenzt werden können und daher eine wesentlich größere Fläche von Lochsieben zur Verfügung steht.

Bei einer Anordnung, bei der der Zuführschacht direkt radial in den Mahlraum einläuft besteht der weitere Nachteil, dass die Statormesser nur ungleichmäßig im Mahlraum angeordnet werden können und damit das Mahlgut nur in unregelmäßigen Taktfolgen zerkleinert werden kann, was die Laufruhe der Maschine beeinträchtigt. Bei der Anordnung der DE-19652904 A1 und der EP-9707103 A hingegen ist es aufgrund der axialen Einführung des Mahlgutes in den Mahlraum möglich, die Statormesser am Umfang gleichmäßig verteilt anzuordnen, z.B. paarweise aneinander gegenüberliegend im Drehwinkelabstand z.B. von 30 Grad. Hierdurch ergibt sich ein absolut gleichmäßiges Verteilen des Mahlgutes und eine gute Laufruhe der Maschine.

Aufgrund der axialen Einführung des Mahlgutes in den Rotor ergibt sich der weitere Vorteil, dass ein gleichmäßiger Luftstrom über den Längsförderer zusammen mit dem Mahlgut in axialer Richtung in den Mahlraum eingeleitet werden kann. Aufgrund dieses gleichmäßigen Luftstromes, der sich im gesamten Mahlraum gleichmäßig radial nach außen verteilen kann wird das gesamte Mahlgut im Mahlraum von diesem Luftstrom erfaßt und gekühlt, was bei einer Anordnung mit radialer Produktförderung nicht möglich ist. Hier wird lediglich die Luft über den in radialer Richtung an den Mahlraum ansetzenden Zuführschacht angesaugt und kühlt dementsprechend auch nur einen Teil des Mahlgutes, während der dem Zuführschacht entgegengesetzte Teil des Mahlgutes nicht mehr von dem Luftstrom durchsetzt wird.

Ein weiterer Vorteil nach der Ausführung der DE-19652904 A1 und der EP-9707103 A besteht darin, dass die Lochsiebe als Siebkörbe ausgebildet sind, welche schwenkbar am Maschinengehäuse gelagert sind und dementsprechend in ihrem Öffnungszustand von der Maschine abschwenkbar sind. Damit ist eine vollständige, umfängliche Zugänglichkeit des Rotors und der Statormesser gegeben.

Auch mit der DE-3201096C2, der US-4,976471 und der DE-3813879A1 sind derartige Messermühlen bekannt geworden.

Allgemein lassen sich derartige Messermühlen gemäß der Zuführung des zu zerschneidenden Produktes unterscheiden, welches entweder radial oder aber axial in den Mahlraum der Messermühle gefördert wird. Die vorliegende erfindungsgemäße Verfahren ist aber bei beiden Prinzipien (axiale oder radiale Produktzufuhr) einsetzbar, funktioniert also unabhängig von der Produktzufuhr.

Weiterhin können derartige Messermühlen darin unterschieden werden, ob die Achse des Rotors stehend oder liegend angeordnet ist, ob ein geschlossener, offener, segmentierter oder dahingehend variierbarer Rotor vorhanden ist, ob mehrere Rotoren vorhanden sind, und wie viele Schneidmesser der Rotor, als auch der Stator besitzt und wie deren Schneidgeometrien beschaffen sind.

Die vorliegende Erfindung soll also unabhängig des Typs der Messermühle eingesetzt werden können und daher hiervon unabhängig beansprucht werden, wobei die besten Ergebnisse bei der beispielhaft beschriebenen Messermühle mit axialer Produktzufuhr, liegender Rotorachse und sichelförmigem Schneidraum festgestellt wurden.

Allgemein werden Messermühlen zur Zerkleinerung von Kunststoff-Rohprodukten eingesetzt, aber auch von Recycling-Kunststoffen. Hierbei können diese zu zerkleinernden Kunststoffe in fester Form vorliegen, aber auch in plastischer Form, wenn Überschüsse bei der thermischen Kunststoffverarbeitung anfallen.

In der Flaschenblasproduktion tritt beispielsweise die Situation ein, dass ungeblasenes Material direkt vom Extruder auf das Förderband fällt. Es handelt sich hierbei um Kunststoff-Klumpen, die bis zu mehreren Kilogramm schwer sein können und etwa 200°C warm sind, auf Grund der Verarbeitungstemperaturen des Extruders. Bisher war es normal, dass der Blasmaschinenführer darauf achtete, dass diese Klumpen auf keinen Fall in die Beistellmühle, egal welcher Bauart, gelangten, da die Mühle durch diese klebrigen, kaugummiartigen Klumpen sofort zuschmieren würde, was einen mehrstündigen Reinigungsvorgang zur Folge hätte, und somit zum Stillstand der ganzen Anlage führen würde.

Diese zu zerkleinernden plastischen warmen Kunststoff-Klumpen werden nach Eintritt in den Mahlraum durch die rotierenden Messer zwar in kleinere, zylinderförmige Klumpen zerteilt, diese legen sich jedoch vor die rotierenden Messer und drehen sich dort um die eigene Achse, so dass sie bei erreichen der Statormesser nicht weiter zerkleinert werden und durch Reibungswärme aufgeheizt werden, wodurch sie immer plastischer werden und ein Zerkleinern nicht mehr möglich ist.

Die US-4,098,463 A offenbart ein Zerkleinerungssystem für Materialien, die thermoplastische Kunststoffen enthalten, wobei die Temperatur in der Zerkleinerungskammer überwacht wird, und ein Kühlflüssigkeit wird in die Kammer gesprüht, wenn die Schneidkammer sich auf einer Temperatur befindet, die größer ist als die Verdampfungstemperatur der Kühlflussigkeit und kleiner ist als die Schmelztemperatur des zu zerkleinernden Thermoplast. Durch Nutzen der Verdampfungswärme, durch Entzug von Wärme aus der Schneidkammer, wird die Wahrscheinlichkeit des Weichwerdens, und/oder Schmelzens des Kunststoffs und Blockieren des Zerkleinerungs-Siebs wesentlich reduziert. Ein höherer Materialdurchsatz wird erreicht, weil das Material härter bleibt. Durch Verdampfen der Flüssigkeit, kann das entnommene zerkleinerte Material sehr trocken gehalten werden, zur späteren Klassifizierung. Bevorzugt wird die Kühlflüssigkeit stoßweise ausgebracht, um die Temperatur der Zerkleinerungskammer zwischen vorgegebenen oberen und unteren Temperaturgrenzen zu halten. Der Zerkleinerer zerkleinert Abfalldrähte und auch Kunststoffmaterial wie Vinylplastik, das von den Abfalldrähten herstammt.

Die US 3960334 A offenbart eine Zerkleinerungsvorrichtung zur Zerkleinerung von Kunststoffmaterial mit einer Stator- und einer Rotorwalze, die ineinander geschachtelt sind und zwischen sich einen Mahlraum definieren, in welchen von der Statorwalze mindestens ein Statormesser und von der Rotorwalze mindestens ein Rotormesser ragt, wobei eine Vorrichtung zur Kühlung des zu zerkleinernden Kunststoffmaterials vorgesehen ist, mittels welcher während des Zerkleinerungsprozesses ein Kühlmedium in den Mahlraum eingebracht werden kann.

Aufgabe der vorliegenden Erfindung ist es, ein gattungsgemäßes Verfahren zum Betrieb einer Messermühle zur Zerkleinerung von Kunststoffmaterial mit Kühlvorrichtung des Mahlraumes derart weiter zu bilden, dass der Kühlwirkungsgrad der Kühlvorrichtung und infolge dessen der Mahlwirkungsgrad der Messermühle verbessert wird.

Dieses Problem wird durch die technische Lehre des unabhängigen Anspruches 1 gelöst. Vorteilhafte Weiterbildungen sind Gegenstand der abhängigen Ansprüche.

Wesentliches Merkmal hierbei ist, dass bei Überschreiten eines vordefinierten Schwellwertes des elektrischen Stromes eines Antriebs für die Rotorwalze, die Drehzahl der Rotorwalze vermindert wird und das Kühlmedium über die Vorrichtung mit der Vielzahl von Düsen in den Mahlraum eingebracht wird.

Vorteil ist, dass die Notwendigkeit einer Kühlung des Mahlraumes rascher erkannt werden kann und eine frühzeitigere Kühlung des Mahlraumes ermöglicht wird und damit der Kühlwirkungsgrad der Kühlvorrichtung und infolge dessen der Mahlwirkungsgrad der Messermühle gegenüber dem Stand der Technik verbessert ist.

An der Messermühle ist eine Vorrichtung zur Kühlung des zu zerkleinernden Kunststoffmaterials vorgesehen, mittels welcher während des Zerkleinerungsprozesses ein Kühlmedium in den Mahlraum eingebracht werden kann.

Das gasförmige und/oder flüssige Kühlmedium wird hierbei insbesondere gezielt in den Mahlraum auf die plastischen Kunststoff-Klumpen vor dem Statormesser eingeleitet, wodurch die plastischen Kunststoff-Klumpen gekühlt werden und zugleich vom Messerbalken und/oder dem Stator mindestens teilweise abgehoben und/oder wegverformt werden.

Das gasförmige Kühlmedium ist hierbei bevorzugt aus Kostengründen Druckluft, es kann aber auch jedes andere beliebige Gas und/oder Flüssigkeit (z.B. kaltes Wasser) eingesetzt werden.

Die Temperatur des Kühlmediums liegt bevorzugt unter der Erstarrungstemperatur des zu zerkleinernden ggf. plastischen Kunststoffmaterials, kann aber auch etwas höher oder niedriger liegen. Wichtig ist nur eine Abfuhr der Energie des zu zerkleinernden Kunststoffmaterials, so dass dieses eine Temperatur erhält, die ein Zerkleinern durch Schneiden, Brechen oder Zerreißen im Mahlraum der erfindungsgemäßen Messermühle zulässt.

Bevorzugt ist die Vorrichtung zur Kühlung des zu zerkleinernden Kunststoffmaterials nur an definierten Stellen vorgesehen, sodass damit das Kühlmedium gezielt in den Mahlraum eingebracht wird, insbesondere in den Bereich vor den Statormessern und vorteilhafter Weise im und/oder am Halter der Statormesser.

Dies ist jedoch nicht zwingend nötig, da in manchen Fällen es genügt, dass das Kühlmedium ungezielt an beliebiger geeignetere Stelle in den Mahlraum eingebracht wird. Dies könnte beispielweise über den selben Weg erfolgen, wie die Produktzufuhr, also über eine Zufuhrschnecke. Auch ist eine Zufuhr des Kühlmediums mindestens teilweise über das Lochsieb möglich.

Bevorzugt wird aber eine gezielte Zufuhr des Kühlmediums in den Mahlraum über zahlreiche kleine Düsenbohrungen, die etwa radial in den Haltern der Statormesser in den Mahrraum verlaufen. Hierdurch wird das zu zerkleinernde Kunststoffmaterial vom Stator abgehoben und/oder im plastischen Zustand des Kunststoffmaterials zu verformt. Das zu zerkleinernde Kunststoffmaterial wird hierdurch an seiner Eigendrehung gehindert, abgekühlt und derart verformt, dass im Folgenden ein Zerkleinern zwischen den Rotor- und Statormessern im Messerspalt möglich ist.

Die Düsenbohrungen im Halter des Statormessers sind dann über eine Querbohrung und eine Anschlussbohrung, die etwa parallel zur Achse der Statorwalze verlaufen mit einer Quelle für das Kühlmedium verbunden.

Als Entsorgung des verbrauchten, erwärmten Kühlmediums dient entweder die aus dem Stand der Technik bekannte Mahlgutentnahme oder aber eine separate Vorrichtung, die z.B. das Kühlmedium über einen externen Wärmetauscher führt und in einem geschlossenen Kreislauf gereinigt wieder verwendet. So können auch feinste Partikel von Gut aus dem Mahlgut mit erwünschter Korngröße entfernt werden,

Ein bevorzugtes Verfahren zum Betrieb herkömmlicher Messermühlen beinhaltet folgende Schritte:

Sobald eine größere Menge zu zerkleinerndes plastisches (ungeblasenes) Kunststoffmaterial in den Mahlraum gelangt, steigt die Stromaufnahme des Rotorantriebsmotors stark an. Hier wird ein Schwellwert (z.B. 40A) bestimmt, bei welchem dann ein Luftventil für den Eintritt der Kühlluft in den Mahlraum geöffnet wird. Gleichzeitig wird die Schnittgeschwindigkeit bzw. die Drehzahl des Rotorantriebsmotors auf 30% des ursprünglichen Wertes z.B. mittels Frequenzumformer abgesenkt.

Durch eine Vielzahl kleiner Bohrungen in den beiden Statormesserhaltern wird nun eine relativ hohe Kühlluftmenge mit hoher Geschwindigkeit für kurze Zeit (z.B. zwei oder drei Stöße von 5-8 Sekunden) in das Mahlwerk eingeblasen.

Die Kombination der mengenabhängigen Zuführung in das Innere des Rotors, des direkten Anblasens des heißen zu zerkleinernden Materials durch viele feine Luftstrahlen mit hoher Blasgeschwindigkeit und die starke Reduktion der Schnittgeschwindigkeit ermöglichen ein Zerschneiden von heißem Kunststoff ohne Einschränkung. Bei Ausführung mit axialer Materialzuführung in den Mahlraum wird das Zerschneiden von heißem Kunststoff noch durch die sichelförmig begrenzten radialen Schneidekammern gefördert.

Bisherige Schneidmühlen nach dem Stand der Technik sind für heiße plastische Kunststoffe nicht geeignet, da die Transportluft für das Abführen des gemahlenen Kunststoffgutes aus dem Mahlraum durch das Sieb hierfür nicht geeignet ist. Der heiße plastische Kunststoff-Klumpen wird durch die Transportluft für das Abführen des gemahlenen Kunststoffgutes weder genügend gekühlt, noch gezielt vom Messerbalken des Stators abgehoben bzw. von diesem weg verformt.

Es zeigen:
- Figur 1:: Schnitt durch die Messermühle nach der Erfindung in Richtung des Pfeils I - I in Figur 2;
- Figur 2:: Seitenansicht der Anordnung nach Figur 1 in Richtung des Pfeils II;
- Figur 3:: Perspektivische Ansicht der Messermühle nach der Erfindung mit Teilausschnitt und herausgenommenem Rotor und Stator;
- Figur 4:: Vergrößerte Darstellung des Schnittbereiches zwischen Statormesser und Rotormesser mit Darstellung der Lufteintrittsbohrung im Halter des Statormessers;
- Figur 5:: Perspektivische Schnittansicht der Lufteintrittsbohrung im Halter des oberen Statormessers mit Darstellung der zahlreichen Luftdüsen;
- Figur 6:: Perspektivische Schnittansicht der Lufteintrittsbohrung im Halter des unteren Statormessers mit Darstellung der zahlreichen Luftdüsen;

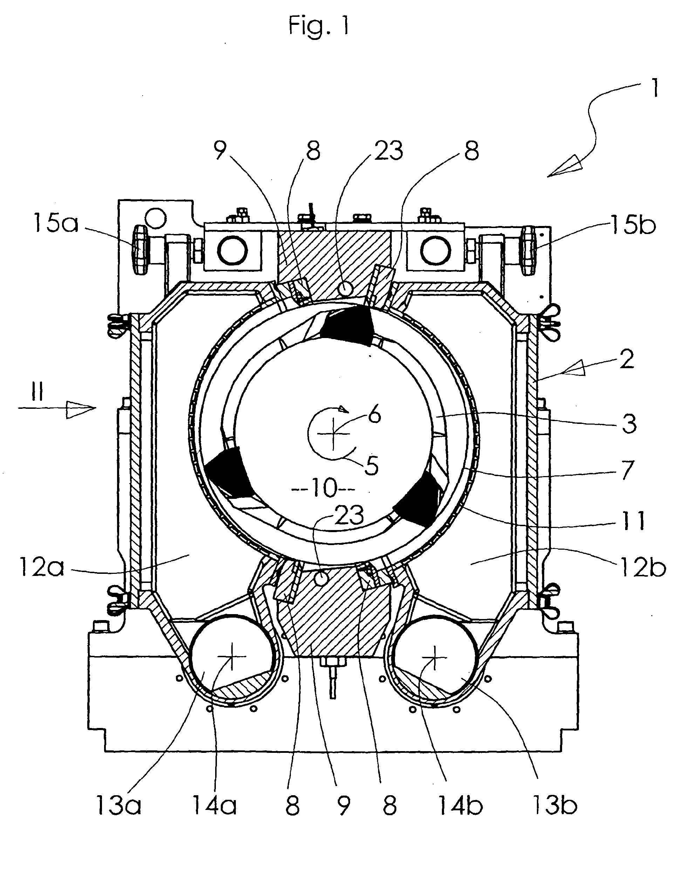

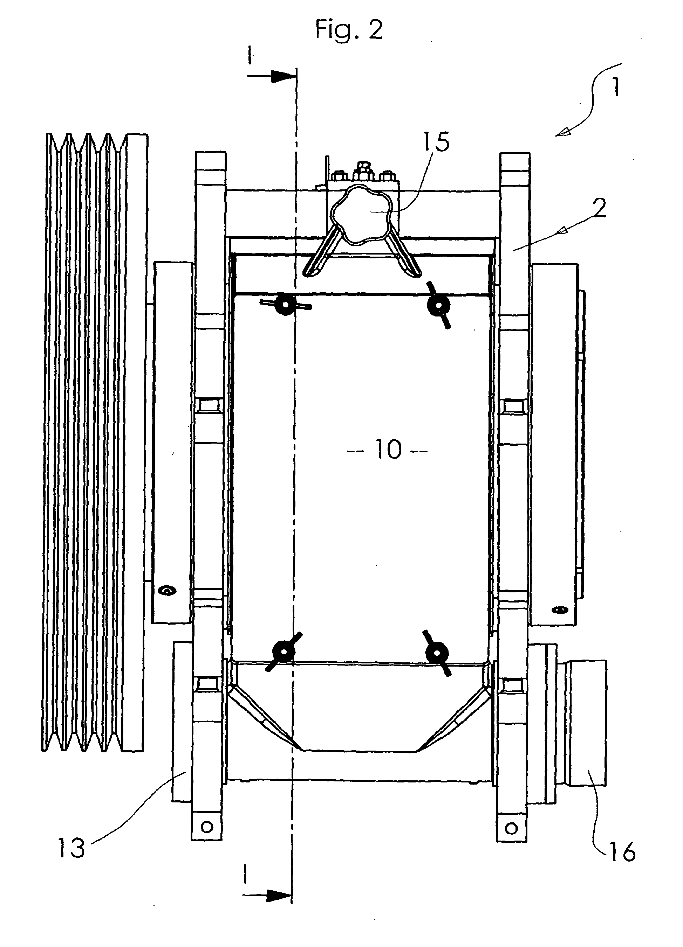

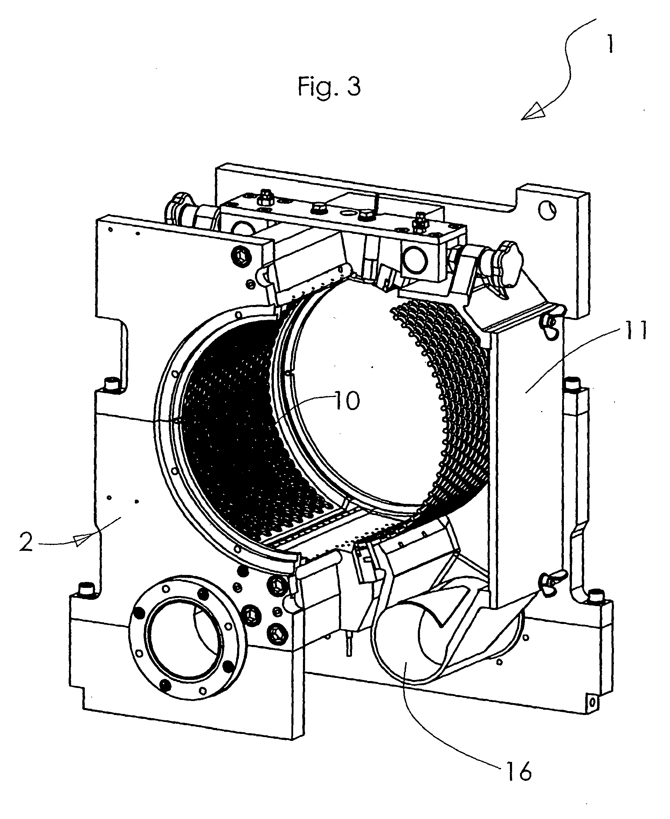

Die Figuren 1 bis 3 zeigen die Messermühle 1 nach der Erfindung, welche aus einem Gehäuse 2 besteht, in welchem eine hohl ausgebildete Statorwalze 7 mit je zwei Statormessern 8 oben und unten gehaltert ist, wobei innerhalb der Statorwalze 7 eine Rotorwalze 3 mit drei gleichmäßig am Umfang verteilten Rotormessern 4 konzentrisch gelagert ist. Zwischen der Statorwalze 7 und der Rotorwalze 3 ist der Mahlraum 10 definiert, der über eine nicht näher dargestellte Förderschnecke mit zu zerkleinerndem Kunststoffmaterial befüllt werden kann.

Die Förderschnecke wird hierbei z.B. mit einer Umdrehungszahl von 25 Umdrehungen pro Minute angetrieben, während die Rotorwalze 3 mit einer Umdrehungszahl von etwa 1200 Umdrehungen pro Minute in Drehrichtung 5 um die Drehachse 6 angetrieben wird. Der Antrieb der Rotorwalze 3 erfolgt hierbei über einen nicht dargestellten Antriebsmotor, der über einen Keilriemen ein Schwungrad antreibt.

Gemäß Figur 1 ist die Rotorwalze 3 als Hohlwelle ausgebildet, so dass in diese Hohlwelle die Schneckenwelle der Förderschnecke mündet.

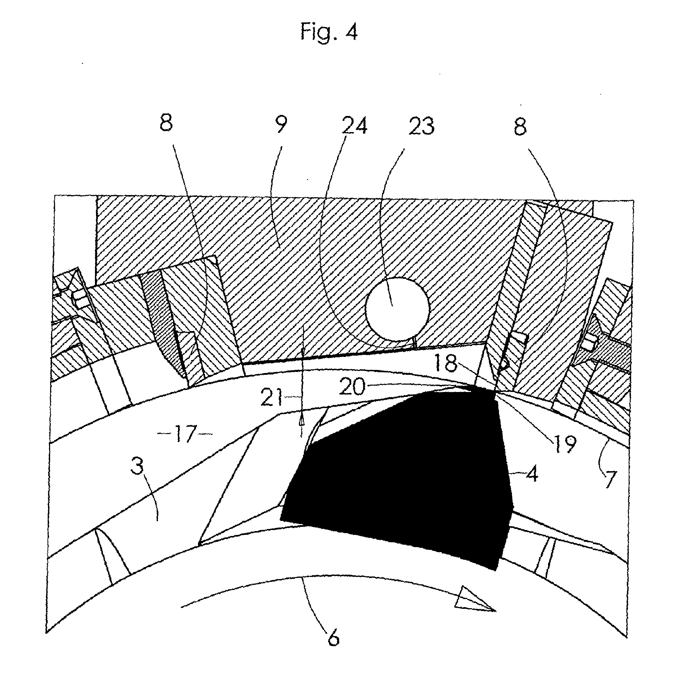

Diese äußere Begrenzung des Mahlraumes wird zu Wartungs- oder Reparaturzwecken durch zwei aneinander gegenüberliegende Lochsiebe 11 gebildet, welche Teile von schwenkbar angeordneten Siebkörben 12 sind, die im oberen Bereich mittels einer lösbaren Befestigung 15 am Gehäuse 2 befestigt werden können. Jeder Siebkorb 12 besteht hierbei aus einem schwenkbaren Teil, welches an dem Lager 13 über eine Schwenkachse 14 schwenkbar am Gehäuse 2 gelagert ist. Die Lochsiebe 11 sind der zylindrischen Form des Mahlraumes 10 angepasst und definieren über den größten Winkelgrad des Mahlraumes die Außenkonturen dieses Mahlraumes 10. Die Formgebung der Lochsiebe 11 weicht im Bereich vor den feststehenden Statormessern 8 von der Kreisform ab, wodurch ein sichelförmiger Schneideraum 17 mit fest gelegter Schneideraumbreite 21 definiert wird (Siehe Figur 4). Das zerkleinerte Material gelangt dann durch die Lochsiebe 11, wird in den Siebkorb 12 gefördert und von einem Sauggebläse (nicht dargestellt) aus der Mahlgutentnahme 16 wegbefördert.

In Figur 4 ist also der sichelförmige Schneidraum 17 zu sehen, und dass zwischen Schneidkante 18 des Statormessers 8 und der Schneikante 19 des Rotormessers 4 ein Messerspalt 20 gebildet wird, in dem sich das zu zerkleinernde mahlgut befindet. Im Halter 9 des Statormessers 8 ist die erfindungsgemäße Vorrichtung zur Kühlung des zu zerkleinernden Kunststoffmaterials vorgesehen, welche hier durch eine Querbohrung 23 ausgeführt ist, die in eine Vielzahl von Düsen 24 mündet, die etwa radial in den Mahlraum 10 eintreten.

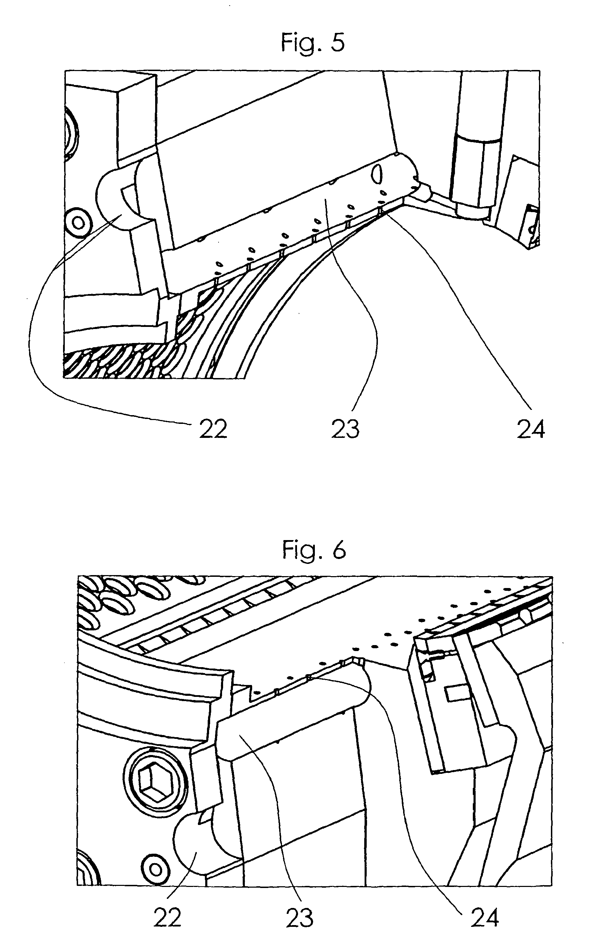

Somit kann nach den Figuren 4 und 5 das Kühlmedium von außen über eine Anschlussbohrung 22 in die Querbohrung 23 eintreten und von dort in die Vielzahl von etwa radialen Düsen 24 im Halter 9 des Statormessers 8, die in mehreren Reihen angeordnet sind.

Natürlich können die Anschlussbohrung 22, die Querbohrung 23 und die Vielzahl von Düsen 24 auch eine andere Formgebung und andere Ausrichtung haben, wichtig ist nur, dass hierdurch das Kühlmedium gezielt in den Bereich vor dem Statormesser 8 in den Mahlraum unter Druck eingebracht werden kann. Auch das Muster der Vielzahl von Düsen 24 kann variieren, je nach Art und Größe des zu zerkleinernden Materials.

Die Erfindung betrifft zusammenfassend also insbesondere eine Messermühle zur Zerkleinerung von Kunststoffmaterial, mit einer in einem Mahlraum rotierend angetriebenen Rotorwalze, die mehrere am Umfang verteilt angeordnete, radial nach außen gerichtete Schneidmesser aufweist, und mehreren ortsfesten, radial einwärts gerichtete, in den Mahlraum hineinragende Statormesser, die zusammen mit den Schneidmessern einen Messerspalt bilden. In Drehrichtung der Rotorwalze sind vor den Statormessern sich sichelförmig nach außen radial erweiternde Schneideräume ausgebildet, welche sich radial auswärts des Drehkreises der rotierenden Schneidmesser befinden. Dadurch wird erreicht, dass die Eigenbewegung des zu zerkleinernden Materials beruhigt wird und der Zerkleinerungsvorgang relativ kontrolliert abläuft, so dass wesentliche Antriebsenergie eingespart wird. Damit auch warme plastische Kunststoffe zerkleinert werden können, kann zusätzliche Kühlluft über Düsen, die sich in den Haltern der Statormessern befinden, gezielt in den Mahlraum eingebracht werden. Bei Überschreiten eines vordefinierten Schwellwertes des elektrischen Stromes des Antriebs für die Rotorwalze, wird automatisch die Drehzahl der Rotorwalze vermindert und Kühlluft gezielt über die zahlreichen Düsen in den Mahlraum vor den Statormessern eingebracht. Hierbei wird eine relativ hohe Menge Kühlluft nicht kontinuierlich, sondern alternierend stoßweise mit hoher Geschwindigkeit für kurze Zeit über die Düsen in den Mahlraum eingebracht.

### Zeichnungslegende

- 1.: Messermühle
- 2.: Gehäuse
- 3.: Rotorwalze
- 4.: Rotormesser
- 5.: Dehrichtung
- 6.: Drehachse
- 7.: Statorwalze
- 8.: Statormesser
- 9.: Halter Statormesser
- 10.: Mahlraum
- 11.: Lochsieb
- 12.: Siebkorb
- 13.: Lager
- 14.: Schwenkachse
- 15.: Lösbare Befestigung
- 16.: Mahlgutentnahme
- 17.: Schneideraum
- 18.: Schneidkante (Statormesser)
- 19.: Schneidkante (Rotormesser)
- 20.: Messerspalt
- 21.: Schneideraumbreite
- 22.: Anschlussbohrung Luftanschluss
- 23.: Querbohrung im Messerträger Stator
- 24.: Luftdüsen im Messerträger Stator (in mehreren Reihen)

## Patentansprüche

1. Verfahren zum Betrieb einer Messermühle (1) zur Zerkleinerung von Kunststoffmaterial, wobei die Messermühle (1) eine Stator- (7) und eine Rotorwalze (3) aufweist, die ineinander geschachtelt sind und zwischen sich einen Mahlraum (10) definieren, in welchen Mahlraum (10) von der Statorwalze (7) mindestens ein Statormesser (8) und von der Rotorwalze (3) mindestens ein Rotormesser (4) ragt, wobei das Verfahren eine Kühlung durch Einbringen von Kühlmedium über eine Vorrichtung (22-24) mit einer Vielzahl von Düsen (24) in den Mahlraum (10) beinhaltet, **dadurch gekennzeichnet, dass** bei Überschreiten eines vordefinierten Schwellwertes des elektrischen Stromes eines Antriebs für die Rotorwalze (3) die Drehzahl der Rotorwalze (3) vermindert wird und das Kühlmedium über die Vorrichtung (22-24) mit der Vielzahl der Düsen (24) in den Mahlraum (10) eingebracht wird.

2. Verfahren nach Anspruch 1, **dadurch gekennzeichnet, dass** der Schwellwert des elektrischen Stromes des Antriebs für die Rotorwalze (3) auf 50 % des momentanen Wertes gesenkt wird.

3. Verfahren nach Anspruch 2, **dadurch gekennzeichnet, dass** der Schwellwert des elektrischen Stromes des Antriebs für die Rotorwalze (3) von etwa 40 Ampere auf etwa 20 Ampere gesenkt wird.

4. Verfahren nach einem der Ansprüche 1 bis 3, **dadurch gekennzeichnet, dass** die Drehzahl der Rotorwalze (3) auf 30 % des momentanen Wertes gesenkt wird.

5. Verfahren nach Anspruch 4, **dadurch gekennzeichnet, dass** die Drehzahl der Rotorwalze (3) von etwa 1200 1/min auf 400 1/min gesenkt wird.

6. Verfahren nach einem der Ansprüche 4 oder 5, **dadurch gekennzeichnet, dass** die Drehzahl der Rotorwalze (3) mittels Frequenzumformer gesenkt wird.

7. Verfahren nach einem der Ansprüche 1 bis 6, **dadurch gekennzeichnet, dass** eine relativ hohe Menge des Kühlmediums mit hoher Geschwindigkeit für kurze Zeit über die Düsen (24) in den Mahlraum (10) eingebracht wird.

8. Verfahren nach einem der Ansprüche 1 bis 7, **dadurch gekennzeichnet, dass** das Kühlmedium nicht kontinuierlich, sondern alternierend stoßweise in den Mahlraum (10) eingebracht wird.

9. Verfahren nach Anspruch 8, **dadurch gekennzeichnet, dass** pro Zyklus, also pro zu zerkleinerndem Klumpen des Kunststoffmaterials, etwa 2 bis 3 Kühlmedium-Stöße in den Mahlraum (10) eingebracht werden, die jeweils etwa 5 bis 8 Sekunden lang sind, so dass also etwa 10 bis 24 Sekunden Kühlmedium stoßweise eingebracht wird.

10. Verfahren nach einem der Ansprüche 1 bis 9, **dadurch gekennzeichnet, dass** das Kühlmedium gasförmig ist und insbesondere Luft ist.

11. Verfahren nach einem der Ansprüche 1 bis 10, **dadurch gekennzeichnet, dass** die Temperatur des Kühlmediums unter der Erstarrungstemperatur des zu zerkleinernden Kunststoffmaterials liegt.

12. Messermühle arbeitend gemäß dem Verfahren nach einem der Ansprüche 1 bis 11, **dadurch gekennzeichnet, dass** die Vorrichtung (22-24) zur Kühlung des zu zerkleinernden Kunststoffmaterials mindestens im Bereich vor dem mindestens einen Statormesser (8) und/oder in und/oder an mindestens einem Halter (9) des Statormessers (8) vorgesehen ist.

## Claims

1. Method for operating a blade mill (1) for grinding plastics material, the blade mill (1) having a stator roller (7) and a rotor roller (3), which are nested in one another and between them define a grinding chamber (10), into which grinding chamber (10) at least one stator blade (8) projects from the stator roller (7) and at least one rotor blade (4) projects from the rotor roller (3), the method comprising cooling by introducing coolant by means of a device (22 to 24) with a large number of nozzles (24) into the grinding chamber (10), **characterised in that** when a predefined threshold value of the electric current of a drive for the rotor roller (3) is exceeded, the rotational speed of the rotor roller (3) is reduced and the coolant is introduced by means of the device (22 to 24) with the large number of nozzles (24) into the grinding chamber (10).

2. Method according to claim 1, **characterised in that** the threshold value of the electric current of the drive for the rotor roller (3) is reduced to 50% of the instantaneous value.

3. Method according to claim 2, **characterised in that** the threshold value of the electric current of the drive for the rotor roller (3) is reduce from about 40 amps to about 20 amps.

4. Method according to any of claims 1 to 3, **characterised in that** the rotational speed of the rotor roller (3) is reduced to 30% of the instantaneous value.

5. Method according to claim 4, **characterised in that** the rotational speed of the rotor roller (3) is reduced from about 1,200 1/min to 400 1/min.

6. Method according to either of claims 4 or 5, **characterised in that** the rotational speed of the rotor roller (3) is reduced by means of frequency converters.

7. Method according to any one of claims 1 to 6, **characterised in that** a relatively high quantity of the coolant is introduced into the grinding chamber (10) via the nozzles (24) at a high speed for a short time.

8. Method according to any one of claims 1 to 7, **characterised in that** the coolant is not introduced continuously, but pulse-wise in an alternating manner into the grinding chamber (10).

9. Method according to claim 8, **characterised in that** for each cycle, in other words for each clump of the plastics material to be ground, about 2 to 3 coolant pulses are introduced into the grinding chamber (10), which are each about 5 to 8 seconds long, so coolant is introduced pulse-wise for about 10 to 24 seconds.

10. Method according to any one of claims 1 to 9, **characterised in that** the coolant is gaseous and is, in particular, air.

11. Method according to any one of claims 1 to 10, **characterised in that** the temperature of the coolant is below the solidification temperature of the plastics material to be ground.

12. Blade mill working according to the method according to any one of claims 1 to 11, **characterised in that** the device (22 to 24) is provided for cooling the plastics material to be ground at least in the region before the at least one stator blade (8) and/or in and/or on at least one holder (9) of the stator blade (8).

## Revendications

1. Procédé pour faire fonctionner un broyeur à lames (1) pour le broyage de matière plastique, le broyeur à lames (1) comportant un stator (7) et un rotor (3) cylindriques qui sont emboîtés l'un dans l'autre et qui définissent entre eux une chambre de broyage (10) dans laquelle au moins une lame de stator (8) dépasse du stator (7) tandis qu'au moins une lame de rotor (4) dépasse du rotor (3), et le procédé comprenant un refroidissement grâce à l'introduction, dans ladite chambre de broyage (10) d'un agent de refroidissement par l'intermédiaire un dispositif (22-24) pourvu d'une multiplicité d'injecteurs (24), **caractérisé en ce que** si la valeur seuil prédéfinie du courant électrique d'un entraînement pour le rotor cylindrique (3) est dépassée, la vitesse de rotation dudit rotor (3) est réduite et l'agent de refroidissement est amené dans la chambre de broyage (10) par l'intermédiaire du dispositif (22-24) pourvu de la multiplicité d'injecteurs (24).

2. Procédé selon la revendication 1, **caractérisé en ce que** la valeur seuil du courant électrique de l'entraînement pour le rotor (3) est abaissée à 50% de la valeur momentanée.

3. Procédé selon la revendication 2, **caractérisé en ce que** la valeur seuil du courant électrique de l'entraînement pour le rotor cylindrique (3) est abaissée pour passer d'environ 40 ampères à environ 20 ampères.

4. Procédé selon l'une des revendications 1 à 3, **caractérisé en ce que** la vitesse de rotation du rotor cylindrique (3) est abaissée à 30% de la valeur momentanée.

5. Procédé selon la revendication 4, **caractérisé en ce que** la vitesse de rotation du rotor cylindrique (3) est abaissée pour passer d'environ 1200 t/min. à 400 t/min.

6. Procédé selon l'une des revendications 4 ou 5, **caractérisé en ce que** la vitesse de rotation du rotor cylindrique (3) est abaissée à l'aide d'un convertisseur de fréquence.

7. Procédé selon l'une des revendications 1 à 6, **caractérisé en ce qu'**une quantité relativement élevée d'agent de refroidissement est amenée à une vitesse élevée, pour une courte période, dans la chambre de refroidissement (10) par l'intermédiaire des injecteurs (24).

8. Procédé selon l'une des revendications 1 à 7, **caractérisé en ce que** l'agent de refroidissement est amené dans la chambre de broyage (10) non pas de manière continue, mais en alternance, par à-coups.

9. Procédé selon la revendication 8, **caractérisé en ce que** pour chaque cycle, c'est-à-dire pour chaque tas de matière plastique à broyer, environ 2 à 3 giclées d'agent de refroidissement d'environ 5 à 8 secondes chacune sont amenées dans la chambre de broyage (10), de sorte que l'agent de refroidissement est introduit par à-coups pendant environ 10 à 24 secondes.

10. Procédé selon l'une des revendications 1 à 9, **caractérisé en ce que** l'agent de refroidissement est gazeux et est constitué en particulier par de l'air.

11. Procédé selon l'une des revendications 1 à 10, **caractérisé en ce que** la température de l'agent de refroidissement est inférieure à la température de solidification de la matière plastique à broyer.

12. Broyeur à lames fonctionnant suivant le procédé selon l'une des revendications 1 à 11, **caractérisé en ce que** le dispositif (22-24) pour refroidir la matière plastique à broyer est prévu au moins dans la zone située devant la ou les lames de stator (8) et/ou dans et/ou sur au moins une fixation (9) de la lame de stator (8).
